# EUROPEAN PATENT APPLICATION

(11) **EP 3 796 232 A1**
(43) Date of publication of application: **24.03.2021**
(21) Application number: 20190589.0
(22) Date of filing: 11.08.2020
(51) Int. Cl.: G06N 3/08

(54) **INFORMATION PROCESSING APPARATUS, METHOD FOR PROCESSING INFORMATION, AND PROGRAM**

(30) Priority: 17.09.2019 JP 2019168078
(71) Applicant: FUJITSU LIMITED, Kanagawa 211-8588 (JP)
(72) Inventor: SAKAI, Yasufumi, Kawasaki-shi, Kanagawa 211-8588 (JP)
(74) Representative: Haseltine Lake Kempner LLP

(57) **Abstract**

An information processing apparatus, includes a quantizing unit configured to quantize at least one of a plurality of variables used in a neural network; a noise addition unit configured to add predetermined noise to each of the at least one of the plurality of variables; and a learning unit configured to execute the neural network by using the at least one of the plurality of quantized variables to which the predetermined noise has been added.

## Description

### FIELD

The embodiments discussed herein are related to an information processing apparatus, a method for processing information, and a computer-readable recording medium.

### BACKGROUND

In the related art, as a method for reducing an execution time of a neural network (NN), a method of quantizing various variables (weight parameters, gradient information, difference values, and the like) used in the NN into fixed decimal values is known.

Related technologies are disclosed in, for example, Japanese Laid-open Patent Publication No. 2018-120441.

### SUMMARY

### [TECHNICAL PROBLEM]

However, when the NN is executed by quantizing various variables, there is a problem that accuracy is degraded as compared with a case where the NN is executed without quantizing various variables.

It is desirable to suppress degradation of the accuracy when a neural network is executed by quantizing variables used therein.

### [SOLUTION TO PROBLEM]

According to an aspect of the embodiments, an information processing apparatus, includes a quantizing unit configured to quantize at least one of variables used in a neural network; a noise addition unit configured to add predetermined noise to each of the at least one of variables; and a learning unit configured to execute the neural network by using the at least one of quantized variables to which the predetermined noise has been added.

### BRIEF DESCRIPTION OF DRAWINGS

Embodiments are set out, by way of example only, with reference to the following drawings, in which:
FIG. 1 is a diagram illustrating an example of a hardware configuration of an information processing apparatus;
FIG. 2 is a diagram illustrating an example of a functional configuration of the information processing apparatus;
FIG. 3 is a diagram illustrating an example of a functional configuration of a learning unit of the information processing apparatus;
FIG. 4 is a diagram illustrating a specific example of processing performed by quantizing units;
FIG. 5 is a diagram illustrating characteristics of noise added by a noise addition unit;
FIG. 6 is a diagram illustrating a specific example of processing performed by noise addition units;
FIG. 7 is a diagram illustrating a specific example of processing performed by updating unit;
FIGs. 8A and 8B are flowcharts illustrating procedures of setting processing and learning processing;
FIG. 9 is a diagram illustrating an effect of adding noise to quantized gradient information; and
FIG. 10 is a flowchart illustrating a procedure of learning processing.

### [ADVANTAGEOUS EFFECTS OF INVENTION]

In one aspect, it is possible to suppress degradation of the accuracy when a neural network is executed by quantizing variables used therein.

### DESCRIPTION OF EMBODIMENTS

Hereinafter, respective embodiments will be described with reference to the accompanying drawings. In the present specification and drawings, components having substantially the same functional configurations will be denoted by the same reference numerals, and redundant description will be omitted.

### [First Embodiment]

### <Hardware Configuration of Information Processing Apparatus>

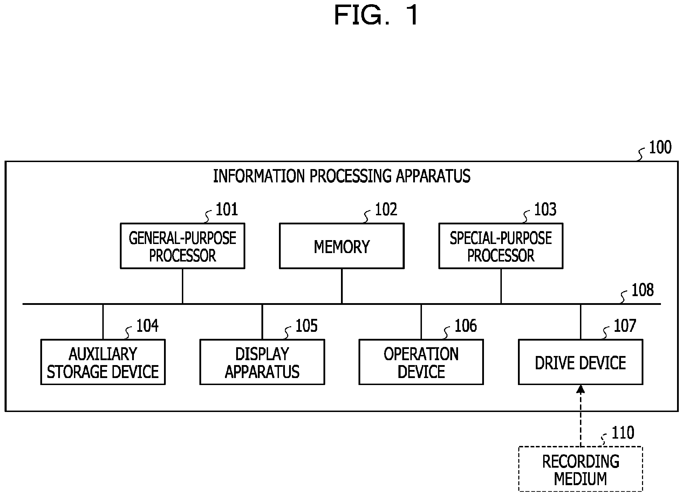

First, a hardware configuration of an information processing apparatus 100 including a processor that executes a neural network (NN) by using a framework for deep learning is described. FIG. 1 is a diagram illustrating an example of a hardware configuration of an information processing apparatus. As illustrated in FIG. 1, the information processing apparatus 100 includes a general-purpose processor 101, a memory 102, and a special-purpose processor 103. The general-purpose processor 101, the memory 102, and the special-purpose processor 103 constitute a so-called computer.

The information processing apparatus 100 also includes an auxiliary storage device 104, a display apparatus 105, an operation device 106, and a drive device 107. Hardware components of the information processing apparatus 100 are coupled to each other via a bus 108.

The general-purpose processor 101 is a calculation device such as a central processing unit (CPU), and executes various programs (for example, an information processing program that implements a framework for deep learning) installed in the auxiliary storage device 104.

The memory 102 is a main storage device including a nonvolatile memory such as a read-only memory (ROM) and a volatile memory such as a random-access memory (RAM). The memory 102 stores various programs for the general-purpose processor 101 to execute various programs installed in the auxiliary storage device 104, and provides a work area on which the various programs are loaded when executed by the general-purpose processor 101.

The special-purpose processor 103 is a processor for deep learning and includes, for example, a graphics processing unit (GPU). When various programs are executed by the general-purpose processor 101, the special-purpose processor 103 executes, for example, a high-speed operation by parallel processing on image data.

The auxiliary storage device 104 is an auxiliary storage device that stores various programs and data to be used when the various programs are executed. For example, a learning data storage unit that will be described later is implemented in the auxiliary storage device 104.

The display apparatus 105 is a display device that displays the internal state or the like of the information processing apparatus 100. The operation device 106 is an input device used when a user of the information processing apparatus 100 inputs various instructions to the information processing apparatus 100.

The drive device 107 is a device in which a recording medium 110 is set. Examples of the recording medium 110 mentioned herein include media that record information optically, electrically, or magnetically, such as CD-ROMs, flexible disks, and magneto-optical disks. Examples of the recording medium 110 may also include semiconductor memories and the like that record information electrically, such as ROMs and flash memories.

Various programs installed in the auxiliary storage device 104 are installed, for example, by setting a distributed recording medium 110 into the drive device 107 and the drive device 107 reading the various programs recorded in the recording medium 110. Alternatively, the various programs installed in the auxiliary storage device 104 may be installed by being downloaded from an unillustrated network.

### <Functional Configuration of Information Processing Apparatus>

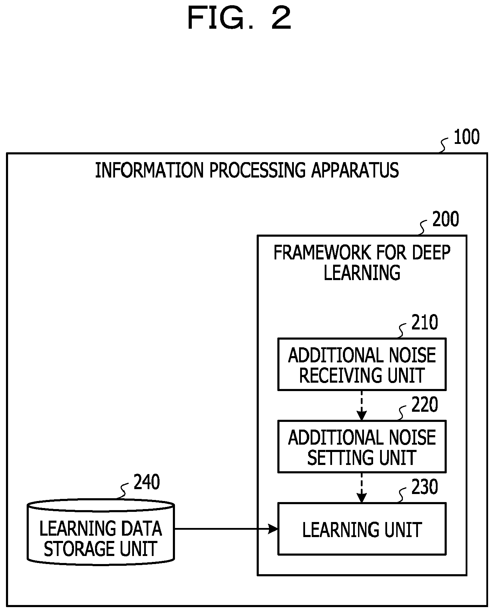

Next, the functional configuration of the information processing apparatus 100 is described. FIG. 2 is a diagram illustrating an example of a functional configuration of the information processing apparatus. As described above, the information processing program is installed in the information processing apparatus 100, and the processor of the information processing apparatus 100 implements a framework 200 for deep learning by executing the program. As illustrated in FIG. 2, in the first embodiment, the framework 200 for deep learning includes an additional noise receiving unit 210, an additional noise setting unit 220, and a learning unit 230.

The additional noise receiving unit 210 receives input of noise to be added to a quantized variable among various variables used in the NN of the learning unit 230. In the first embodiment, among various variables used in the NN, gradient information calculated by back-propagating difference values at the time of learning is quantized. For example, in the first embodiment, the additional noise receiving unit 210 receives input of noise to be added to the quantized gradient information.

The additional noise setting unit 220 sets the noise received by the additional noise receiving unit 210 in the NN of the learning unit 230.

The learning unit 230 performs learning processing by executing the NN by using learning data (input data and correct data). For example, the learning unit 230 reads the input data from a learning data storage unit 240 and inputs the read input data into the NN to perform forward propagation processing for computing the input data.

The learning unit 230 reads correct data from the learning data storage unit 240 and calculates difference values between the computation result obtained by the forward propagation processing and the read correct data. The learning unit 230 also performs backward propagation processing in which gradient information is calculated while back-propagating the calculated difference values.

The learning unit 230 quantizes the calculated gradient information and adds the noise set by the additional noise setting unit 220 to the quantized gradient information. Further, the learning unit 230 performs update processing of updating weight parameters of the previous learning by multiplying the gradient information to which noise has been added by a learning rate and subtracting the result of the multiplication from the weight parameters of the previous learning. Thus, in the next forward propagation processing, the input data may be subjected to computation by using the updated weight parameter.

### <Functional Configuration of Learning Unit>

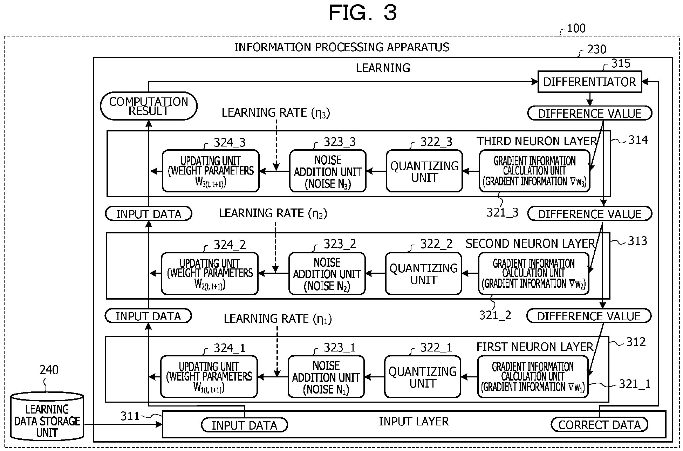

Next, a functional configuration of the learning unit 230 is described. FIG. 3 is a diagram illustrating an example of a functional configuration of a learning unit of the information processing apparatus. As illustrated in FIG. 3, the learning unit 230 includes an input layer 311, a first neuron layer 312, a second neuron layer 313, a third neuron layer 314, and a differentiator 315. Although the number of neuron layers is three in the example of FIG. 3, the number of neuron layers included in the learning unit 230 is not limited to three.

The input layer 311 reads sets of input data and correct data in units of mini-batches from the learning data storage unit 240 and inputs the input data into the first neuron layer 312. The input layer 311 also inputs the correct data into the differentiator 315.

The first neuron layer 312 includes a gradient information calculation unit 321_1, a quantizing unit 322_1, a noise addition unit 323_1, and an updating unit 324_1.

The gradient information calculation unit 321_1 calculates gradient information (∇w₁) from the difference values calculated by the differentiator 315 at the time of learning. The quantizing unit 322_1 quantizes the calculated gradient information (∇w₁). The noise addition unit 323_1 adds noise (N₁) to the quantized gradient information (∇w₁). The noise (N₁) added by the noise addition unit 323_1 is the noise received by the additional noise receiving unit 210 and set by the additional noise setting unit 220.

The updating unit 324_1 updates weight parameters (W₁₍ₜ₎) calculated by the updating unit 324_1 at the time of the previous learning, by multiplying the gradient information to which the noise (N₁) has been added by a learning rate (η₁). In the first neuron layer 312, input data is subjected to computation by using updated weight parameters (W₁₍ₜ₊₁₎). The first neuron layer 312 inputs the input data having undergone the computation into the second neuron layer 313.

Similarly, the second neuron layer 313 includes a gradient information calculation unit 321_2, a quantizing unit 322_2, a noise addition unit 323_2, and an updating unit 324_2.

The gradient information calculation unit 321_2 calculates gradient information (∇w₂) from the difference values calculated by the differentiator 315 at the time of learning. The quantizing unit 322_2 quantizes the calculated gradient information (∇w₂). The noise addition unit 323_2 adds noise (N₂) to the quantized gradient information (∇w₂). The noise (N₂) added by the noise addition unit 323_2 is the noise received by the additional noise receiving unit 210 and set by the additional noise setting unit 220.

The updating unit 324_2 updates weight parameters (W₂₍ₜ₎) calculated by the updating unit 324_2 at the time of the previous learning, by multiplying the gradient information to which the noise (N₂) has been added by a learning rate (η₂). In the second neuron layer 313, input data is subjected to computation by using updated weight parameters (W₂₍ₜ₊₁₎). The second neuron layer 313 inputs the input data having undergone the computation into a third neuron layer 314.

Similarly, the third neuron layer 314 includes a gradient information calculation unit 321_3, a quantizing unit 322_3, a noise addition unit 323_3, and an updating unit 324_3.

The gradient information calculation unit 321_3 calculates gradient information (∇w₃) from the difference values calculated by the differentiator 315 at the time of learning. The quantizing unit 322_3 quantizes the calculated gradient information (∇w₃). The noise addition unit 323_3 adds noise (N₃) to the quantized gradient information (∇w₃). The noise (N₃) added by the noise addition unit 323_3 is the noise received by the additional noise receiving unit 210 and set by the additional noise setting unit 220.

The updating unit 324_3 updates weight parameters (W₃₍ₜ₎) calculated by the updating unit 324_3 at the time of the previous learning, by multiplying the gradient information to which the noise (N₃) has been added by a learning rate (η₃). In the third neuron layer 314, input data is subjected to computation by using updated weight parameters (W₃₍ₜ₊₁₎). The third neuron layer 314 inputs a computation result obtained by performing computation on the input data into the differentiator 315.

The differentiator 315 calculates difference values between the correct data input from the input layer 311 and the computation result input from the third neuron layer 314, and back-propagates the calculated difference values. As a result of this, the first neuron layer 312 to the third neuron layer 314 calculate the gradient information to be used for the next learning.

<Specific Example of Processing Performed by Respective Units of Learning Unit>

Next, a specific example of processing performed by respective units (here, the quantizing units 322_1 to 322_3, the noise addition units 323_1 to 323_3, and the updating units 324_1 to 324_3) included in the respective neuron layers of the learning unit 230 will be described.

### (1) Specific Example of Processing Performed by Quantizing Units

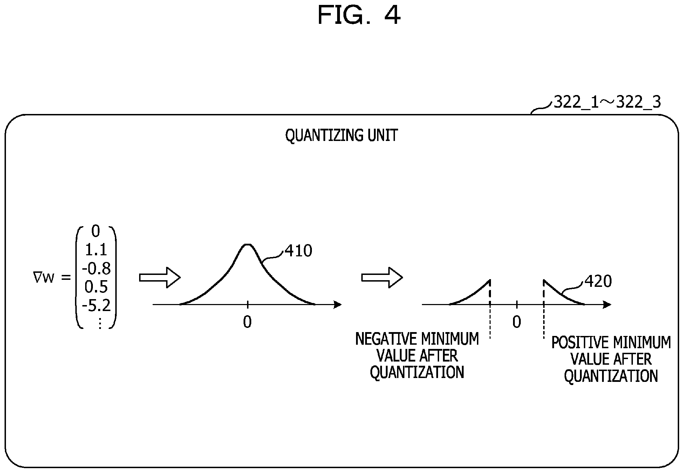

First, a specific example of the processing performed by the quantizing units 322_1 to 322_3 is described. FIG. 4 is a diagram illustrating a specific example of processing performed by quantizing units. As described above, the quantizing units 322_1 to 322_3 receive the gradient information from the gradient information calculation units 321_1 to 321_3 every time difference values are back-propagated during learning.

Here, each value of the gradient information Vw (∇w₁ to ∇w₃) received by the quantizing units 322_1 to 322_3 is, for example, (0, 1.1, -0.8, 0.5, -5.2, ...). As illustrated in FIG. 4, a histogram representing the appearance frequency of each value of the gradient information Vw follows a normal distribution (see reference numeral 410).

In the histogram denoted by the reference numeral 410, the horizontal axis represents each value of the gradient information Vw received by the quantizing units 322_1 to 322_3, and the vertical axis represents the appearance frequency of each value.

For example, the histogram indicated by reference numeral 410 is a histogram of a normal distribution in which the average value is 0 and the variance value is 1/3 times the possible maximum value of the gradient information Vw.

Here, when the quantizing units 322_1 to 322_3 quantize the gradient information Vw, a histogram representing the appearance frequency of each value of the quantized gradient information Vw has a distribution as indicated by a reference numeral 420. For example, as a result of the quantization, the appearance frequency of values between the negative minimum value after quantization and the positive minimum value after quantization (that is, values in the vicinity of 0) becomes 0, and only values exceeding the positive minimum value after quantization or values less than the negative minimum value after quantization appear.

### (2) Specific Example of Processing Performed by Noise Addition Units

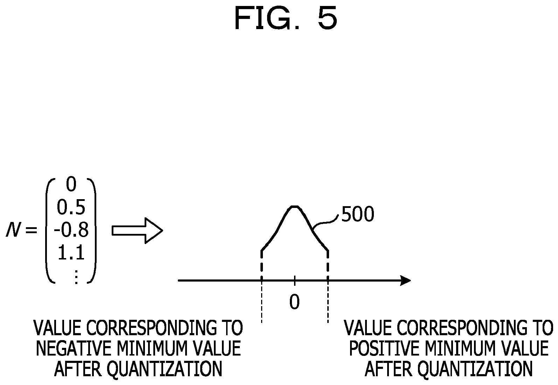

Next, a specific example of processing performed by the noise addition units 323_1 to 323_3 is described. FIG. 5 is a diagram illustrating characteristics of noise added by the noise addition units. The noise N (N₁ to N₃) added by the noise addition units 323_1 to 323_3 is noise received by the additional noise receiving unit 210 and set by the additional noise setting unit 220, and is, for example, (0, 0.5, -0.8, 1.1, ...).

A histogram denoted by a reference numeral 500 in FIG. 5 represents the appearance frequency of each value of the noise N (N₁ to N₃). For example, the additional noise receiving unit 210 receives the noise N (N₁ to N₃) in which the appearance frequency of each value has the histogram denoted by the reference numeral 500, and the additional noise setting unit 220 sets the noise N (N₁ to N₃) in the noise addition units 323_1 to 323_3.

As illustrated in FIG. 5, the noise N includes only values between the negative minimum value after quantization and the positive minimum value after quantization obtained by quantization of the gradient information Vw performed by the quantizing units 322_1 to 322_3. In other words, the noise N does not include a value less than the negative minimum value after quantization obtained by quantization of the gradient information Vw performed by the quantizing units 322_1 to 322_3. In addition, the noise N does not include a value exceeding the positive minimum value after quantization obtained by quantization of the gradient information Vw performed by the quantizing units 322_1 to 322_3.

The histogram denoted by the reference numeral 500 is a histogram of a normal distribution in which the average value is 0 and the variance value is 1/3 times the possible maximum value of the gradient information Vw. As described above, the appearance frequency of each value of the noise N (N₁ to N₃) is determined by the appearance frequency of each value of the gradient information Vw (∇w₁ to ∇w₃) before quantization.

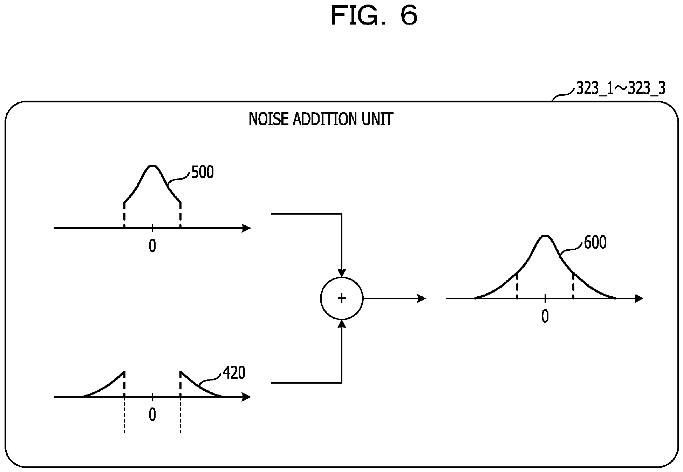

FIG. 6 is a diagram illustrating a specific example of the processing performed by the noise addition units. As described above, the noise addition units 323_1 to 323_3 add the noise N to the quantized gradient information Vw. FIG. 6 illustrates the relationship between the histogram (reference numeral 420) representing the appearance frequency of each value of the quantized gradient information Vw, the histogram (reference numeral 500) representing the appearance frequency of each value of the noise N, and a histogram (reference numeral 600) representing the appearance frequency of each value of the noise-added gradient information obtained by adding the noise N to the quantized gradient information Vw.

As illustrated in FIG. 6, the histogram denoted by the reference numeral 600 is a histogram of a normal distribution in which the average value is 0 and the variance value is 1/3 times the possible maximum value of the gradient information ∇w.

As described above, the noise addition units 323_1 to 323_3 add the noise N (N₁ to N₃) to complement values whose appearance frequency has become 0 as a result of the quantization performed by the quantizing units 322_1 to 322_3. As a result, the appearance frequency similar to the appearance frequency of each value of the gradient information Vw before quantization is reproduced. As a result, the influence of the quantization by the quantizing units 322_1 to 322_3 is suppressed, and thus the degradation of the accuracy in the case of performing the learning processing by quantizing the gradient information Vw may be suppressed.

### (3) Specific Example of Processing Performed by Updating Units

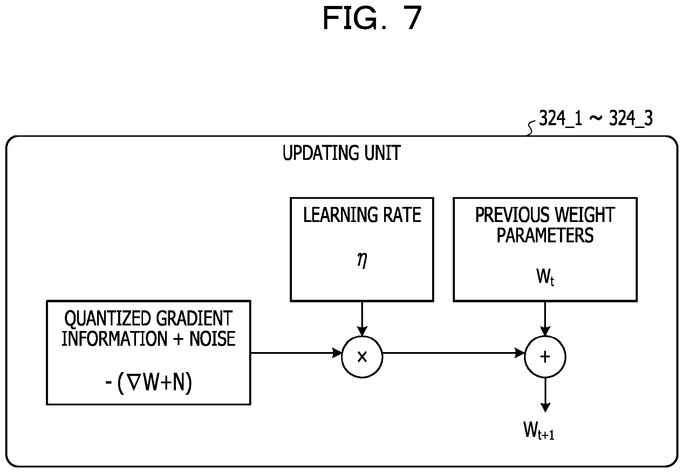

Next, a specific example of processing performed by the updating units 324_1 to 324_3 is described. FIG. 7 is a diagram illustrating a specific example of processing performed by the updating units. As illustrated in FIG. 7, the updating units 324_1 to 324_3 multiply the quantized gradient information ∇w (∇w₁ to ∇w₃) to which the noise N (N₁ to N₃) has been added by a learning rate η (η₁ to η₃), and subtract the result from previous weight parameters Wₜ (W₁₍ₜ₎ to W₃₍ₜ₎). Accordingly, the updating units 324_1 to 324_3 update the previous weight parameters Wₜ (W₁₍ₜ₎ to W₃₍ₜ₎) and calculate updated weight parameters Wₜ₊₁ (W₁₍ₜ₊₁₎ to W₃₍ₜ₊₁₎).

### <Procedures of Setting Processing and Learning Processing>

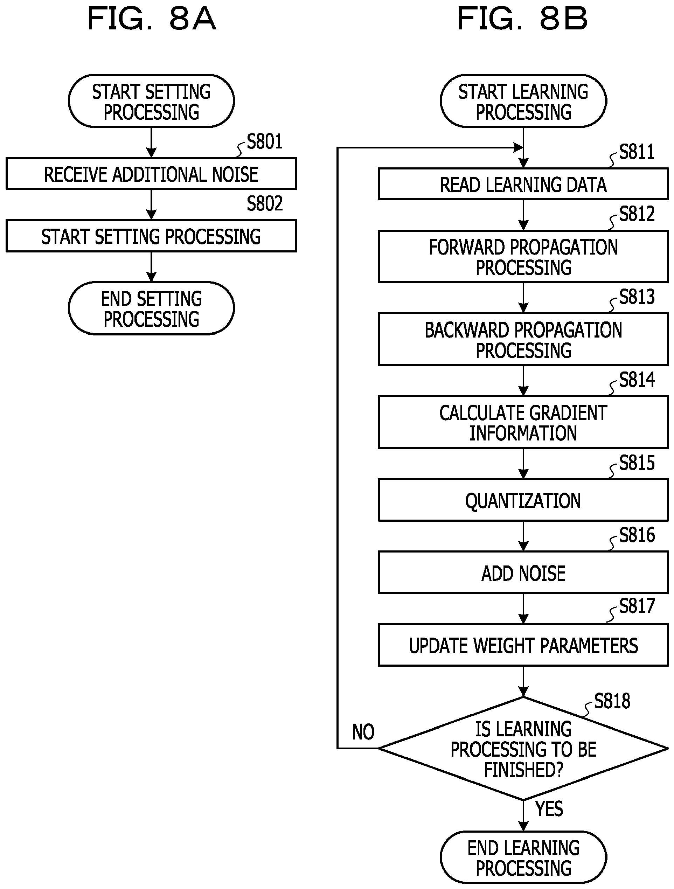

Next, procedures of setting processing and learning processing performed by the information processing apparatus 100 will be described. FIGs. 8A and 8B are flowcharts illustrating the procedures of the setting processing and the learning processing.

Among these, FIG. 8A is a flowchart illustrating the procedure of the setting processing performed by the information processing apparatus 100. In step S801, the additional noise receiving unit 210 receives input of the noise N (N₁ to N₃) to be added to a quantized variable (gradient information ∇w (∇w₁ to ∇w₃) in the first embodiment) among various variables used in the NN of the learning unit 230.

In step S802, the additional noise setting unit 220 sets the noise N (N₁ to N₃) received by the additional noise receiving unit 210 in the noise addition units 323_1 to 323_3.

FIG. 8B is a flowchart illustrating the procedure of the learning processing performed by the information processing apparatus 100. As illustrated in FIG. 8B, in step S811, the learning unit 230 reads learning data in units of mini-batches from the learning data storage unit 240.

In step S812, the learning unit 230 performs forward propagation processing on the input data included in the learning data read in units of mini-batches.

In step S813, the learning unit 230 calculates the difference values between the correct data included in the learning data read in units of mini-batches and the computation result obtained by the forward propagation processing, and performs backward propagation processing of back-propagating the calculated difference values.

In step S814, the learning unit 230 calculates gradient information Vw (∇w₁ to ∇w₃) based on the difference values. In step S815, the learning unit 230 quantizes the calculated gradient information Vw (∇w₁ to ∇w₃). In step S816, the learning unit 230 adds the noise N (N₁ to N₃) to the quantized gradient information. In step S817, the learning unit 230 multiplies the gradient information Vw (∇w₁ to ∇w₃) to which the noise N (N₁ to N₃) has been added by the learning rate η (η₁ to η₃), and subtracts the result from the weight parameters Wₜ (W₁₍ₜ₎ to W₃₍ₜ₎) calculated in the previous leaning. Accordingly, the learning unit 230 updates the weight parameters Wₜ (W₁₍ₜ₎ to W₃₍ₜ₎) calculated in the previous learning.

In step S818, the learning unit 230 determines whether or not to finish the learning processing. In the case where the learning unit 230 has determined to continue the learning processing (in the case where the result of step S818 is NO), the process returns to step S811. In the case where the learning unit 230 has determined in step S818 to finish the learning processing (in the case where the result of step S818 is YES), the learning unit 230 finishes the learning processing.

### <Effect of Addition of Noise>

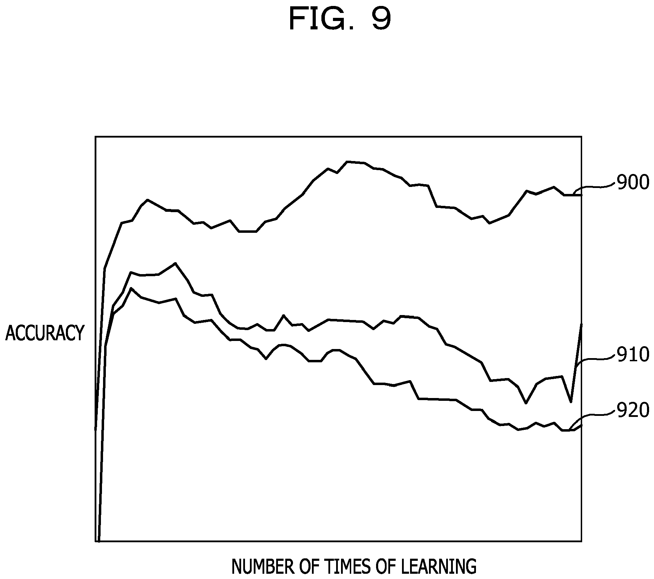

Next, an effect of adding noise to the quantized gradient information is described. FIG. 9 is a diagram illustrating the effect of adding noise to the quantized gradient information. In FIG. 9, the horizontal axis represents the number of times of learning performed by the learning unit 230, and the vertical axis represents the accuracy. In FIG. 9, a graph 900 represents the transition of the accuracy of the case where the learning processing is performed without quantizing the gradient information.

In contrast, graphs 910 and 920 represent the transition of the accuracy of cases where the learning processing is performed by quantizing the gradient information. Among these, the graph 910 represents a case where noise is added to the quantized gradient information, and the graph 920 represents a case where noise is not added to the quantized gradient information.

As is clear from the comparison between the graph 910 and the graph 920, when noise is added to the quantized gradient information, it is possible to suppress the degradation of the accuracy compared with the case where noise is not added to the quantized gradient information.

As is clear from the above description, the processor included in the information processing apparatus 100 according to the first embodiment executes the NN by the framework for deep learning, and performs the learning processing. In addition, the processor included in the information processing apparatus 100 according to the first embodiment quantizes the gradient information used in the NN in the learning processing, and adds predetermined noise to the quantized gradient information. Further, in the learning processing, the processor included in the information processing apparatus 100 according to the first embodiment executes the NN by using the quantized gradient information to which predetermined noise has been added.

As described above, in the information processing apparatus 100 according to the first embodiment, during the learning processing, values whose appearance frequency has become 0 as a result of quantization are complemented by the predetermined noise. Accordingly, the information processing apparatus 100 according to the first embodiment may reproduce the appearance frequency similar to the appearance frequency of each value of the gradient information before quantization. As a result, it is possible to suppress the influence of the quantization of the gradient information, and it is possible to suppress the degradation of the accuracy of the case where the learning processing is performed by quantizing the gradient information.

### [Second Embodiment]

In the first embodiment, a case where only the gradient information among various variables used in the NN of the learning unit is quantized has been described. However, among various variables used in the NN of the learning unit, the variable to be quantized is not limited to the gradient information, and other variables (weight parameters, difference values, and the like) may be quantized.

In a second embodiment, a case where the weight parameters and the difference values are also quantized in addition to the gradient information and noise is added to each quantized variable similarly to the first embodiment will be described. Hereinafter, mainly the difference of the second embodiment from the first embodiment will be described.

### <Procedure of Learning Processing>

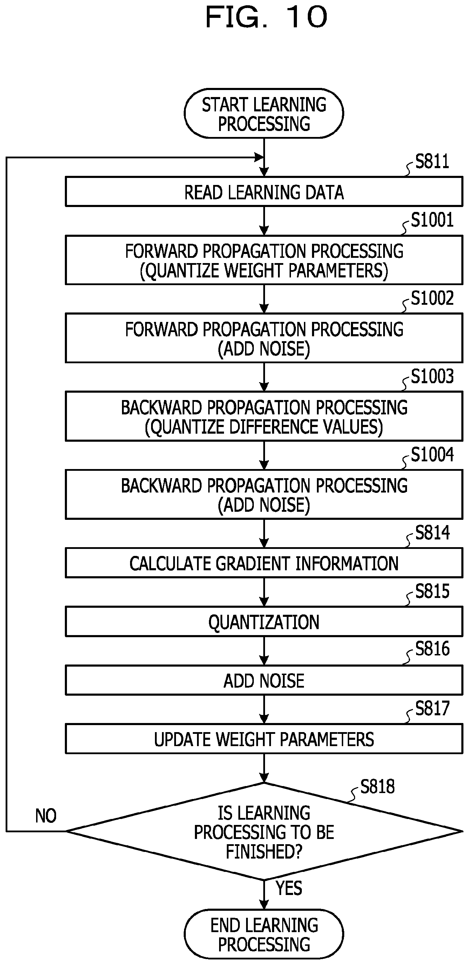

FIG. 10 is a flowchart illustrating a procedure of learning processing. Steps S1001 to S1004 are different from the learning processing of FIG. 8B. It is assumed that noise added to the quantized gradient information, noise added to the quantized weight parameters, and noise added to the quantized difference values are set in advance before the start of the learning processing of FIG. 10.

In step S1001, the learning unit 230 quantizes weight parameters used for computation of input data in forward propagation processing.

In step S1002, the learning unit 230 adds noise to the quantized weight parameters. Then, the learning unit 230 performs computation on the input data included in the learning data read in units of mini-batches, by using the weight parameters to which the noise has been added.

In backward propagation processing of step S1003, the learning unit 230 calculates the difference values between the correct data included in the learning data read in units of mini-batches and the computation result obtained by the forward propagation processing, and quantizes the calculated difference values.

In step S1004, the learning unit 230 adds noise to the quantized difference values and back-propagates the noise-added difference values.

As is clear from the above description, in the learning processing, the processor included in the information processing apparatus 100 according to the second embodiment quantizes various variables (weight parameters, difference values, and gradient information) used in the NN, and adds predetermined noise to each of the quantized variables. Further, in the learning processing, the processor included in the information processing apparatus 100 according to the second embodiment executes the NN by using the quantized weight parameters, difference values, and gradient information to which the predetermined noise has been added.

As described above, in the information processing apparatus 100 according to the second embodiment, during the learning processing, values whose appearance frequency has become 0 as a result of quantization are complemented by predetermined noise. Accordingly, the information processing apparatus 100 according to the second embodiment may reproduce the appearance frequency similar to the appearance frequency of each value of the various variables before quantization. As a result, it is possible to suppress the influence of the quantization of the various variables, and it is possible to suppress the degradation of the accuracy of the case where the learning processing is performed by quantizing the various variables.

### [Other Embodiments]

In each of the above embodiments, a case where noise is added to various variables used in the NN of the learning unit has been described. However, the various variables to which noise is added are not limited to the various variables used in the NN of the learning unit, and noise may be added to various variables (for example, the weight parameters) when a learned NN that has already been subjected to the learning processing by the learning unit is used as an inference unit. As a result, it is possible to suppress degradation of the accuracy when inference processing is performed by quantizing various variables.

Further, in each of the above-described embodiments, description has been given assuming that each value of noise is set so that the appearance frequency thereof has a histogram of a normal distribution (a normal distribution in which the average value is 0 and the variance value is 1/3 times the possible maximum value before quantization). However, the noise to be set is not limited to such noise in which the appearance frequency of each value has a histogram of a normal distribution.

For example, each value of noise may be set so that the appearance frequency thereof has a histogram of a normal distribution (a normal distribution in which the average value is 0 and the variance value is 1/M times the possible maximum value before quantization (M is an integer, for example, 5 or 7)). Alternatively, each value of the noise may be set so that the appearance frequency thereof has a histogram of a probability distribution other than a normal distribution (for example, a uniform distribution, a Laplacian distribution, or a gamma distribution).

Alternatively, a probability distribution model may be fitted based on the statistical information of the variables, and each value of noise may be set so that the appearance frequency thereof has a histogram of the fitted probability distribution model.

Although the above embodiments have been described on the assumption that the additional noise receiving unit 210, the additional noise setting unit 220, and the learning unit 230 (and interference unit) are implemented in the single information processing apparatus 100, these units may be implemented in multiple information processing apparatuses.

In any of the above aspects, the various features may be implemented in hardware, or as software modules running on one or more processors.

The invention also provides a computer program or a computer program product comprising instructions for carrying out any of the methods described herein, and a non-transitory computer readable medium having stored thereon a program comprising instructions for carrying out any of the methods described herein. A computer program embodying the invention may be stored on a non-transitory computer-readable medium, or it could, for example, be in the form of a signal such as a downloadable data signal provided from an Internet website, or it could be in any other form.

The present disclosure is not limited to the configurations illustrated herein while the configurations exemplified according to the aforementioned embodiments may also be combined with other elements, for example. These aspects may be changed without departing from the gist of the present disclosure and appropriately set in accordance with applied modes thereof.

## Claims

1. An information processing apparatus, comprising:
a quantizing unit configured to quantize at least one of a plurality of variables used in a neural network;
a noise addition unit configured to add predetermined noise to each of the at least one of the plurality of variables; and
a learning unit configured to execute the neural network by using the at least one of the plurality of quantized variables to which the predetermined noise has been added.

2. The information processing apparatus according to claim 1,
wherein the at least one of the plurality of variables quantized in the quantization includes at least one of a difference value that is back-propagated during learning, gradient information calculated by back-propagating the difference value during learning, and a weight parameter used for computation of input data during learning or inference.

3. The information processing apparatus according to claim 2,
wherein the noise addition unit includes adding, in the addition, noise whose histogram representing appearance frequency of each value thereof has a predetermined probability distribution to the quantized variable.

4. The information processing apparatus according to claim 3,
wherein the learning unit is configured to, in a case where the gradient information calculated by back-propagating the difference value during learning is quantized in the quantization and the noise is added to the quantized gradient information in the addition, update a weight parameter of previous learning by multiplying the quantized gradient information to which the noise has been added by a learning rate and subtracting a result of the multiplication from the weight parameter of the previous learning.

5. The information processing apparatus according to claim 3 or claim 4,
wherein the probability distribution is a normal distribution whose average value is 0, whose variance value is 1/M times (M is an integer) a maximum value of the gradient information, and in which an appearance frequency of values thereof equal to or larger than a minimum value of the quantized gradient information is 0.

6. A method for processing information by a processor that executes a neural network, the information processing method comprising:
quantizing at least one of a plurality of variables used in a neural network;
adding predetermined noise to each of the at least one of the plurality of variables; and
executing the neural network by using the at least one of the plurality of quantized variables to which the predetermined noise has been added.

7. A program for causing a computer to execute a process, the process comprising:
quantizing at least one of a plurality of variables used in a neural network;
adding predetermined noise to each of the at least one of the plurality of variables; and
executing the neural network by using the at least one of the plurality of quantized variables to which the predetermined noise has been added.
